# EUROPÄISCHE PATENTSCHRIFT

(11) **EP 1 275 289 B1**
(45) Veröffentlichungstag und Bekanntmachung des Hinweises auf die Patenterteilung: **28.02.2007**
(21) Anmeldenummer: 02015131.2
(22) Anmeldetag: 06.07.2002
(51) Int. Cl.: A01D 43/063

(54) **Vorrichtung zur Anzeige des Füllstandes im Fangkorb**
Fill indicator for collecting means
Indicateur de remplissage pour réceptacle

(30) Priorität: 10.07.2001 US 901955
(43) Veröffentlichungstag der Anmeldung: 15.01.2003
(73) Patentinhaber: DEERE & COMPANY, Moline, Illinois 61265-8098 (US)
(72) Erfinder: Jerome, Russel R., Horicon, WI 53032 (US); Benway, Randy Edward, Horicon, WI 53032 (US)
(74) Vertreter: Magin, Ludwig Bernhard

(56) Entgegenhaltungen:
- DE-U- 9 111 827
- FR-A- 2 658 800
- FR-A- 2 750 005
- US-A- 4 445 456
- US-A- 5 388 394
- US-A- 5 425 223
- US-A- 5 605 033
- US-A- 5 775 077

## Beschreibung

Die Erfindung betrifft ein Fahrzeug zur Rasen-, Garten- und Grundstückspflege mit einem Mähwerk mit einer Auswurföffnung, einem Auffangbehälter und einem Auslasskanal, welcher die Auswurföffnung mit dem Auffangbehälter verbindet, wobei der Auslasskanal mit einem den in dem Auslasskanal herrschenden Luftdruck messenden Füllstandanzeiger verbunden ist.

Füllstandanzeiger für an Fahrzeugen zur Rasen-, Garten- und Grundstückspflege anbringbare Auffangbehälter können meist optisch anzeigen, dass der Auffangbehälter vollständig gefüllt ist. Eine derartiger Füllstandanzeiger, wie er beispielsweise in der US-A-5,388,394 beschrieben wird, zeigt einer Bedienungsperson nur an, dass der Auffangbehälter befüllbar oder vollständig gefüllt ist. Aufgrund der nicht optimalen Wirkungsweise solcher Füllstandanzeiger, kann es vorkommen, dass der Auffangbehälter überfüllt wird und ein Auslasskanal, welcher ein Mähwerk mit dem Auffangbehälter verbindet, verstopft, und durch die Bedienungsperson gereinigt werden muss.

Auch andere Systeme, die beispielsweise ein Luftstrom messen oder elektrische Einrichtungen oder auch Sichtfenster aufweisen, lösen dieses Problem nicht vollständig.

Das der Erfindung zugrunde liegende Problem wird darin gesehen, dass bekannte Füllstandanzeiger nicht optimal arbeiten, wodurch es zu einem Überfüllen eines Auffangbehälters bzw. einem Verstopfen kommen kann.

Dieses Problem wird erfindungsgemäß durch die Lehre des Patentanspruchs 1 gelöst, wobei in den weiteren Patentansprüchen die-Lösung in vorteilhafter Weise weiterentwickelnde Merkmale aufgeführt sind.

Auf diese Weise wird ein Fahrzeug mit einem Mähwerk und einem mit dem Mähwerk über einen Auslasskanal verbundenen Auffangbehälter zur Verfügung gestellt, welches einen Füllstandanzeiger für den Auffangbehälter aufweist, der nicht nur anzeigt, ob der Auffangbehälter leer bzw. vollständig gefüllt ist, sondern einer Bedienungsperson die Möglichkeit bietet, den Füllstand des Auffangbehälters kontinuierlich zu überwachen.

Der Füllstandanzeiger kann in der Art eines für den Druck in dem Auslasskanal empfindlichen Druckmessers ausgebildet sein, bzw. einen solchen aufweisen, wobei eine Verbindung durch eine Luftleitung bzw. allgemein durch eine luftdurchlässige Leitung, welche den Druckmesser bzw. den Füllstandanzeiger mit dem Auslasskanal verbindet, erfolgt.

Eine ständige Überwachung durch die Bedienungsperson kann in einfacher Weise erfolgen, wenn der Füllstandanzeiger Anzeigemittel aufweist, welche für die Bedienungsperson möglichst immer und insbesondere von einem Fahrersitz des Fahrzeugs aus sichtbar sind.

Weist der Füllstandanzeiger eine Kammer auf, welche durch eine flexible bzw. biegsame Membran aufgeteilt wird, so kann die Membran sich in Abhängigkeit von dem Druck in der Kammer bewegen.

In der Kammer kann neben der Membran ein Kolben vorgesehen sein, welcher die Membran in der Kammer führt. Hierzu kann der Kolben beispielsweise in einer Leithülse angeordnet sein oder allgemein mit einer Führung zusammenwirken.

Die Anzeigemittel können beispielsweise mit dem Kolben bzw. mit der Membran verbunden sein, so dass sie bei einer druckabhängigen Bewegung derselben, verstellt werden.

Darüber hinaus können an dem Füllstandzeiger oder an dem Gehäuse ortsfeste Anzeigemittel vorgesehen sein, die eine Beurteilung des Füllstandes bzw. der Stellung des beweglichen Anzeigemittels erleichtern.

Der Auffangbehälter ist vorzugsweise in einem rückwärtigen Bereich des Fahrzeugs vorgesehen, wobei der Auslasskanal an dem Fahrzeug seitlich entlang und bezogen auf das Mähwerk nach oben verläuft.

In der Zeichnung ist ein nachfolgend näher beschriebenes Ausführungsbeispiel der Erfindung dargestellt. Es zeigt:
- Fig. 1: eine perspektivische Seitenansicht eines Füllstandanzeigers an einem Fahrzeug zur Rasen-, Garten- und Grundstückspflege,

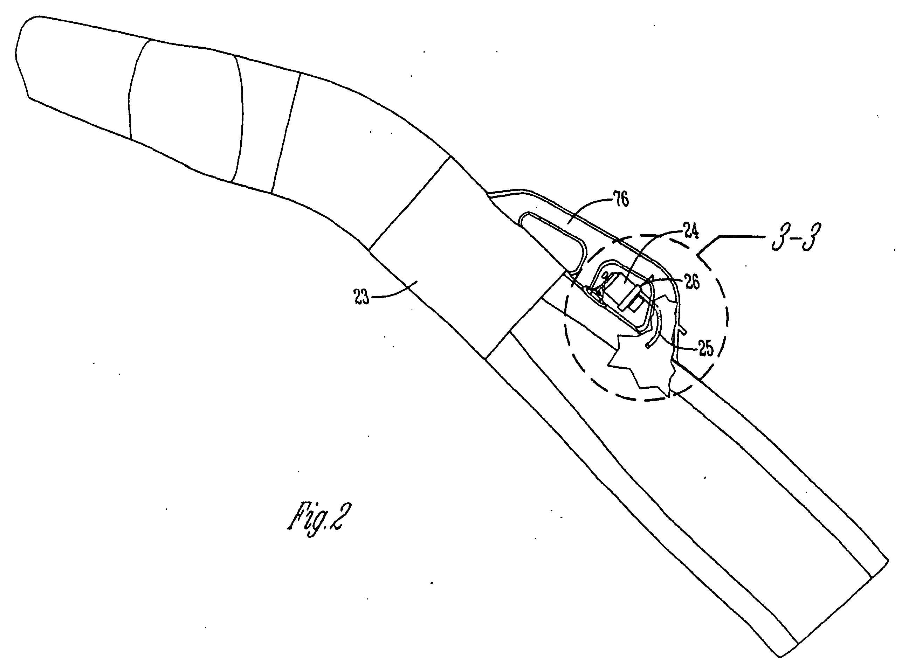

- Fig. 2: eine weitere Seitenansicht des Füllstandanzeigers, welcher in einem Auslasskanal angebracht ist,

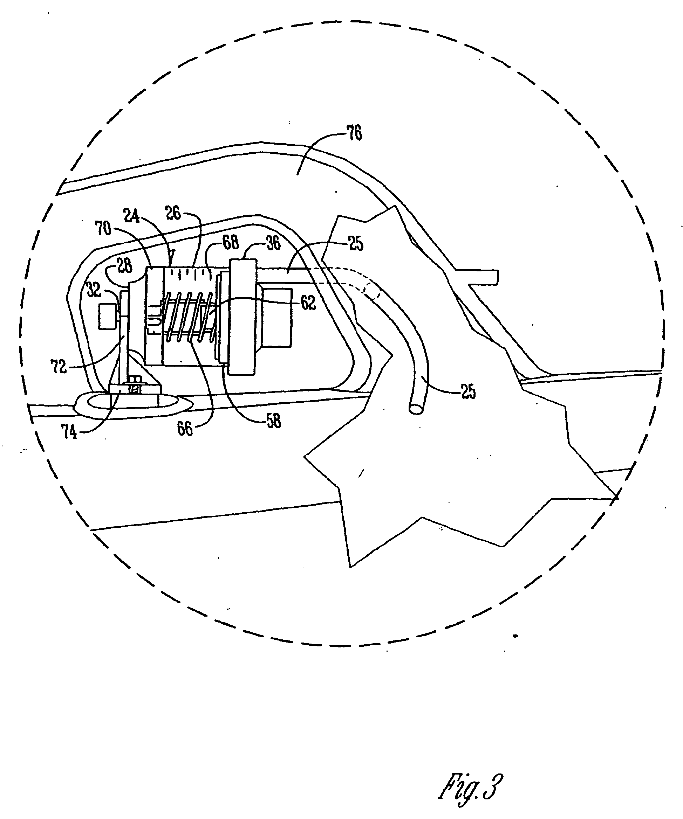

- Fig. 3: eine vergrößerte Darstellung des Füllstandanzeigers entlang der Linie 3-3 aus Fig. 2,
- Fig. 4: eine vergrößerte Ausschnittsdarstellung des Füllstandanzeigers und
- Fig. 5: eine weitere Seitenansicht des Füllstandanzeigers aus Fig. 4.

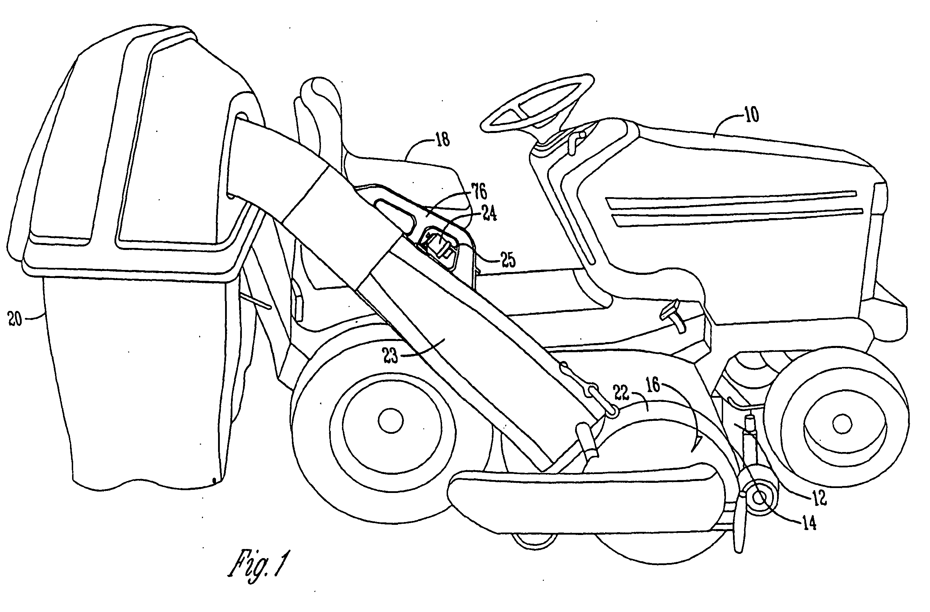

Es wird zuerst auf Figur 1 Bezug genommen, in der ein Rasentraktor bzw. ein Fahrzeug 10 gezeigt wird, welches ein unter dem Fahrzeug 10 angeordnetes Mähwerk 12 mit einer Auslassöffnung 14 aufweist. An die Auslassöffnung 14 angrenzend ist ein Zusatzgebläse 16 vorgesehen (obwohl ein solches Gebläse 16 nicht notwendig ist). An einem oberen rückwärtigen Endbereich des Fahrzeugs 10 ist ein Fahrersitz 18 vorgesehen. An dem rückwärtigen Endbereich des Fahrzeugs 10 ist ein geschlossener Auffangbehälter 20 für geschnittene Pflanzenabschnitte, wie Gras, angebracht. Oberhalb der Auslassöffnung 14 und des Zusatzgebläses 16 befindet sich ein geschlossenes Gehäuse 22.

Von diesem geschlossenen Gehäuse 22 erstreckt sich ein längliches Rohr bzw. ein Auslasskanal 23, der sich längs an dem Fahrersitz 18 vorbei erstreckt, zu einem oberen Bereich des Auffangbehälters 20.

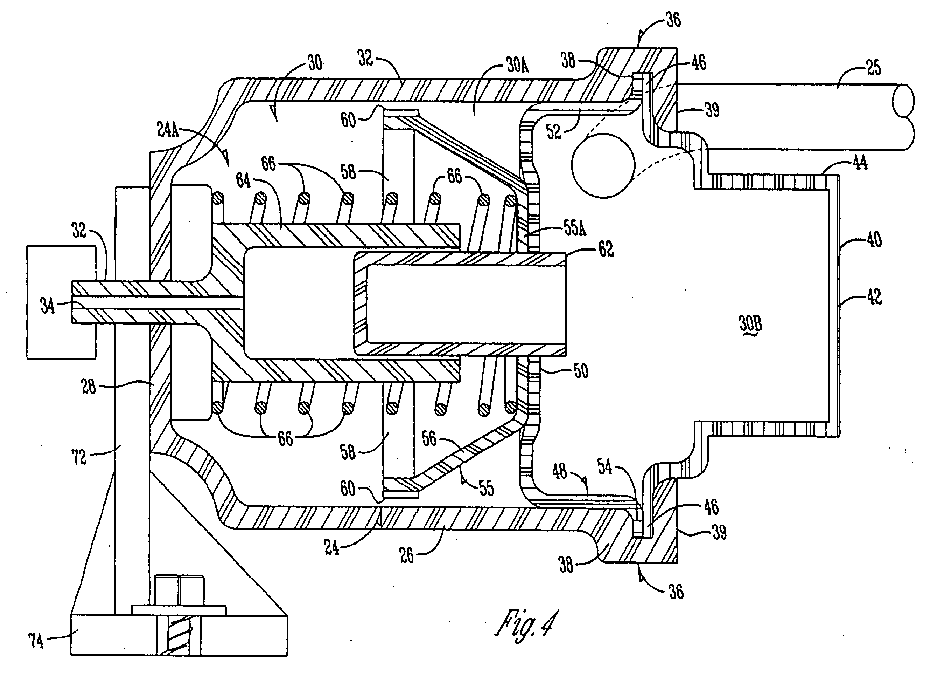

Ein Füllstandanzeiger 24, wie er am besten in Figur 4 gesehen werden kann, weist ein erstes Gehäuse 24 auf. (Fig. 4.). Der Füllstandanzeiger 24A ist mit dem Auslasskanal 23 über eine Luftleitung 25 verbunden, welche mit dem Inneren des Auslasskanals 23 in Verbindung steht, um den Grad an statischem Druck in dem Auslasskanal 23 zu messen. Der Füllstandanzeiger 24A ist von der Art, wie sie im Wesentlichen in der US-A-4,445,456 gezeigt wird, welche durch diese Bezugnahme hierin eingeschlossen wird.

Das erste Gehäuse 24 wird vorzugsweise aus einem passenden, im Wesentlichen zylindrischen, transparenten Kunststoffmaterial hergestellt und weist eine ringförmige Seitenwand 26 und eine erste Endwand 28 auf, welche eine insgesamt im Wesentlichen zylindrische Kammer 30 in dem Gehäuse 24 bestimmen. Von der ersten Endwand 28 erstreckt sich zentral ein Halsbereich 32 mit einem Kanal 34 durch sich hindurch, der es Luft erlaubt, aus der Kammer 30 durch den Kanal 34 zu entweichen.

Ein ringförmiger nach außen versetzter Bereich 36 ist um die Seitenwand angeordnet und eine ringförmige abgewinkelte Schulter 38 ist an einer Innenseite des versetzten Bereichs 38 angeformt innerhalb eines ringförmigen sich nach innen erstreckenden Flansch 39 dargestellt.

Ein verhältnismäßig kurzes tassenartiges Element bildet und bestimmt ein zweites Gehäuse 40, welches ein metallenes Pressteil oder ein Kunststoffformteil sein kann und welches einen geringeren Durchmesser als das erste Gehäuse 24 aufweist. Das zweite Gehäuse 40 weist ein Ende oder eine Bodenwand 42 und eine ringförmige Seitenwand 44 auf. Das Gehäuse 40 bestimmt auch mit dem ersten Gehäuse 24 zusammen die gesamte Kammer 30. Die Seitenwand 44 des zweiten Gehäuses 40 endet in einem rechtwinkligen Flansch 46 von derartiger Breite, um auf den ringförmigen Flansch 39 aufgesetzt zu werden.

Ein(e) umgekehrte(s) oder tassenförmiges Diaphragma bzw. Membran 48 aus nachgiebigem Kunststoff weist eine Endwand 50 und eine Seitenwand 52 auf und ist zwischen dem ersten Gehäuse 24 und dem zweiten Gehäuse 40 angeordnet. Ein Flansch 54 an der Membran 38 ist derart angeordnet, dass er auf dem Flansch 46 und unterhalb der Schulter 38 liegt. Ein passender Klebstoff (nicht dargestellt) kann die Flansche 46 und 54 zwischen der Schulter 38 und dem Flansch 39 sichern. Die Membran 48 dient dazu, die gesamte Kammer 30 in zwei Teile aufzuteilen, eine erste Kammer 30A, welche an ein Ende des ersten Gehäuses 24, somit an die Endwand 28 angrenzt, und eine zweite Kammer 30B, welche an ein anderes Ende des zweiten Gehäuses 40 und somit an die Endwand des zweiten Gehäuses 40 angrenzt.

Auf die Membran 48 ist ein aufrechtes, kegelstumpfartiges, tassenförmiges Element 55 aus festem Kunststoff aufgesetzt und entweder adhesiv oder mechanisch durch eine Unterlegscheibe (nicht dargestellt) gesichert. Das Element 55 weist eine Bodenwand 55A auf, welche auf der Endwand 50 der Membran 48 aufliegt und eine ringförmige aufgeweitete Seitenwand 56 aufweist, welche in einem vertikalen Randbereich 58 endet. Ein hell bzw. leuchtend gefärbter Ring 60 ist auf dem Randbereich 58 vorgesehen, um eine deutlich sichtbare Anzeige in dem Gehäuse 24 zu bilden, welche durch die längsverlaufende Stellung des Füllstandanzeigers 24A die Menge an Differenz an statischem Druck in dem Auslasskanal 23 anzeigt und somit das Ausmaß in dem der Auffangbehälter 20 mit Abschnitten gefüllt ist.

Von dem Zentrum der Membran 48 erstreckt sich ein Kolben 62 zu der Endwand 28. Von der Endwand 28 erstreckt sich eine transparente zylindrische Leithülse 64, welche den Kolben 62 aufnimmt, wenn die Membran 48 zu der Endwand 28 durch den durch die Luftleitung 25 erhaltenen Luftdruck gedrückt wird. Die Leithülse 64 ist von derartiger Länge, dass der Kolben 62 nicht vollständig in die Leithülse 62 eingezogen wird, wenn die Membran 48 entlüftet ist.

In der Kammer 30, und die Leithülse 64 umgebend, ist eine Spiralfeder bzw. Feder 66 angeordnet. Ein oberer Endbereich der Feder 66 stützt sich an der Endwand 28 ab und ein unterer Endbereich ist auf die Bodenwand 55A des Elements 55 aufgesetzt. Die Feder 66 wirkt einer Bewegung der Membran 48 in Richtung der oberen Endwand entgegen, wenn Luftdruck von der Luftleitung 25 die Kammer 30B zwischen der Membran 48 und der Endwand 42 mit Luft befüllt. Die Kraft der Feder 66 bringt die Membran 48 in ihre entlüftete Stellung zurück, wenn der Auffangbehälter 20 leer ist und der Luftdruck in dem Auslasskanal 23 auf normal zurückkehrt.

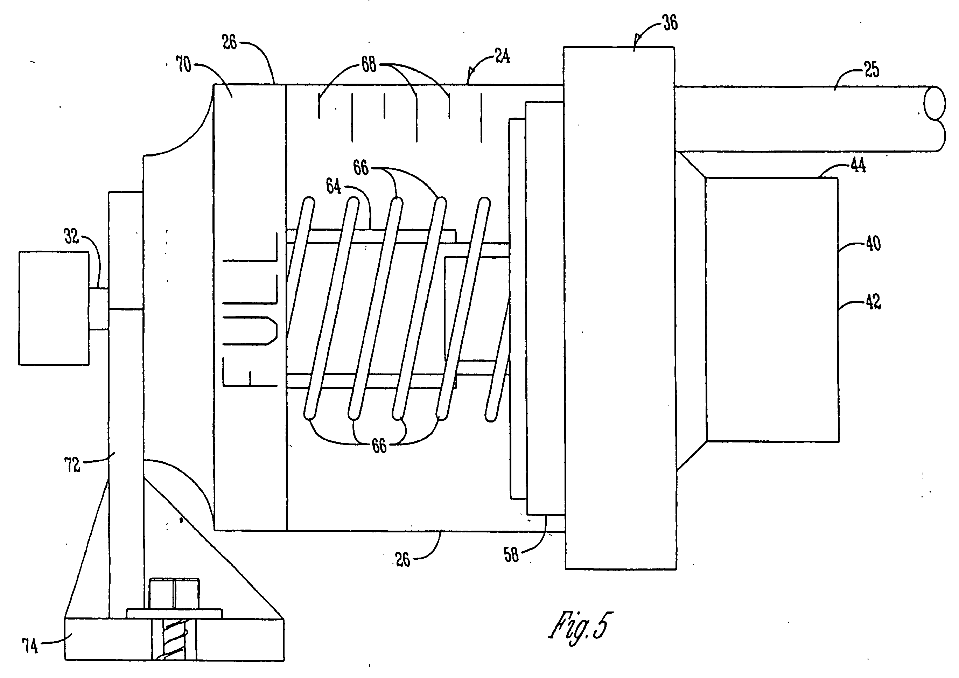

An der Seitenwand 26 des ersten Gehäuses 24 sind beabstandete Linien 68 (Fig. 5) vorgesehen, die den Grad anzeigen, zu dem der Auffangbehälter 20 gefüllt ist, wenn der Ring 60 verlagert ist, um sich mit bestimmten Linien 68 auszurichten. Ein Band 70 (Fig. 5) zeigt an, dass der Auswurfbehälter 20 voll ist. Die bestimmten Linien 68 sind nur zur Illustration gezeigt.

Mit dem Halsbereich 32 ist eine Platte 72 verbunden, die sich senkrecht zu dem Füllstandanzeiger 24A erstreckt und eine Basis 74 aufweist, um den Füllstandanzeiger 24A bzw. das Gehäuse 24 an dem Auslasskanal 23 anzubringen. Eine Leitschiene 76 erstreckt sich von dem Auslasskanal 23 über das Gehäuse 24 hinaus, um den Füllstandanzeiger 24A davor zu schützen, gestoßen oder entfernt zu werden.

Durch ein Anbringen des Füllstandanzeigers 24A an dem Auslasskanal 23, wird der Füllstandanzeiger 24A verwendet, um die Menge an Differenz an statischem Druck in dem Auslasskanal 23 über die Luftleitung 25 zu messen, welche den Auslasskanal 23 mit der Kammer 32B in dem Gehäuse 24 verbindet. Wenn sich der Auffangbehälter 20 füllt, steigt der Luftdruck in dem System und zwingt Luft durch die Luftleitung 25 in Richtung die Kammer 30B, welche allmählich die Membran 48 in Richtung der Endwand 28 bewegt. Wenn sich die Membran 48 bewegt, gleitet der Kolben 62 in der Leithülse 64 und drückt Luft aus der Kammer 30B durch den Kanal 34.

Durch das Anbringen beabstandeter Linien 68 (Fig. 5) an der Seitenwand 26 des Gehäuses 24, kann eine Bedienungsperson von dem Fahrersitz 18 aus den ansteigenden Grad an Luftdruck in dem Auslasskanal 23 erkennen, wenn sich der Auffangbehälter 20 zunehmend mit Pflanzenabschnitten füllt. Wenn sich der Ring 60 in Verbindung mit der Bewegung der Membran 48 bewegt, richtet sich der Ring 60 mit verschiedenen Linien 68 aus, um den Füllstand des Auffangbehälters 20 anzuzeigen. Aus dieser Information, welche von dem Anzeigesystem visuell kommuniziert wird, kann eine Bedienungsperson den Füllstandsgrad des Auffangbehälters 20 bestimmen. Da das Gehäuse 24 und der Ring 60 sich langsam mit Bezug zu kleinen Druckänderungen in dem Auslasskanal 23 bewegen, hat die Bedienungsperson ausreichend Zeit das Mähen zu unterbrechen, bevor der Auffangbehälter 20 vollständig gefüllt und der Auslasskanal 23 verstopft ist. Sobald der Auffangbehälter 20 geleert ist, wird der Ring 60 automatisch zurückgesetzt, da der Luftdruck in dem Auslasskanal 23 auf Normal zurückkehrt, wenn sich die Membran 48 in die Kammer 30 aufgrund des zu normal zurückkehrenden Luftdrucks in dem Auslasskanal 23 zurückzieht.

Aus dieser Beschreibung kann ersehen werden, dass der Füllstandanzeiger 24A fortlaufend den Füllstandsgrad des Auffangbehälters 20 anzeigt und es einer Bedienungsperson erlaubt, den allmählichen Füllstandsanstieg des Auffangbehälters 20 zu beobachten und somit der Bedienungsperson ausreichend Zeit geliefert wird, um den Mähbetrieb zu beenden, bevor das System verstopft.

Während eine bevorzugte Ausführungsform der Erfindung gezeigt und beschrieben wurde, soll es deutlich werden, dass Veränderungen möglich sind, ohne vom Schutzbereich der Ansprüche abzuweichen.

## Patentansprüche

1. Fahrzeug (10) zur Rasen-, Garten- und Grundstückspflege mit einem Mähwerk mit einer Auswurföffnung (14), einem Auffangbehälter (20) und einem Auslasskanal (23), welcher die Auswurföffnung mit dem Auffangbehälter (20) verbindet, wobei der Auslasskanal (23) mit einem den in dem Auslasskanal (23) herrschenden Luftdruck messenden Füllstandanzeiger (24A) verbunden ist, **dadurch gekennzeichnet, dass** der Füllstandanzeiger (24A) ein Anzeigemittel aufweist, welches unterschiedliche Füllstandstufen des Auffangbehälters (20) anzeigt.

2. Fahrzeug nach Anspruch 1, **dadurch gekennzeichnet, dass** der Füllstandanzeiger (24A) eine Kammer (30) aufweist, welche durch eine biegsame Membran (28) in zwei Kammern (30A, 30B) aufgeteilt wird.

3. Fahrzeug nach Anspruch 2, **dadurch gekennzeichnet, dass** einer der Kammern (30B) über eine Luftleitung (25) mit dem Auslasskanal (23) in Verbindung steht.

4. Fahrzeug nach Anspruch 2 oder 3, **dadurch gekennzeichnet, dass** der Füllstandanzeiger (24A) einen verschiebbare Kolben (62) aufweist, welcher mit der Membran (48) zusammenwirkt .

5. Fahrzeug nach einem oder mehreren der Ansprüche 2 bis 4, **dadurch gekennzeichnet, dass** die Membran (48) bzw. der Kolben (62) derart mit einer Feder (66) zusammenwirkt, dass sie gegen einen in einem der Kammern (30A, 30B) anstehenden Druck belastet wird.

6. Fahrzeug nach einem oder mehreren der Ansprüche 2 bis 5, **dadurch gekennzeichnet, dass** die Stellung des Anzeigemittels durch die Membran (48) bestimmt wird.

7. Fahrzeug nach einem oder mehreren der Ansprüche 2 bis 6, **dadurch gekennzeichnet, dass** das Anzeigemittel als ein mit der Membran (48) bzw. dem Kolben (62) wirksam verbunden und vorzugsweise als ein Ring (66) ausgebildet ist, welcher mit ortsfesten vorzugsweise an einem Gehäuse (24) des Füllstandanzeigers (24A) vorgesehenen Referenzanzeigen, welche vorzugsweise in der Art beabstandeter Linien (68) ausgebildet sind, zusammenwirkt.

8. Fahrzeug nach einem oder mehreren der vorherigen Ansprüche, **gekennzeichnet durch** einen Zusatzlüfter, welcher mit dem Auslasskanal (23) wirksam verbunden ist.

9. Fahrzeug nach einem oder mehreren der vorherigen Ansprüche, **dadurch gekennzeichnet, dass** der Füllstandanzeiger (24A) bzw. zumindest das Anzeigemittel derart angeordnet, dass.er durch eine auf einem Fahrersitz des Fahrzeugs (10) sitzende Bedienungsperson wahrgenommen werden kann.

10. Fahrzeug nach einem oder mehreren der vorherigen Ansprüche, **dadurch gekennzeichnet, dass** der Auffangbehälter (20) in einem rückwärtigen Bereich des Fahrzeugs (10) angeordnet ist und der Auslasskanal (23) vorzugsweise seitlich entlang des Fahrzeugs (10) verläuft.

## Claims

1. Vehicle (10) for lawn, garden and land care with a mowing assembly with a discharge opening (14), a collecting container (20) and an outlet channel (23), which connects the discharge opening with the collecting container (20), wherein the outlet channel (23) is connected to a fill indicator (24A) measuring the air pressure prevailing in the outlet channel (23), **characterised in that** the fill indicator (24A) has a display means, which displays different level stages of the collecting container (20).

2. Vehicle according to Claim 1, **characterised in that** the fill indicator (24A) has a chamber (30), which is divided into two chambers (30A, 30B) by a flexible membrane (28).

3. Vehicle according to Claim 2, **characterised in that** one of the chambers (30B) connects with the outlet channel (23) via an air pipe (25).

4. Vehicle according to Claim 2 or 3, **characterised in that** the fill indicator (24A) has a displaceable plunger (62), which cooperates with the membrane (48).

5. Vehicle according to one or more of Claims 2 to 4, **characterised in that** the membrane (48) or the plunger (62) cooperates with a spring (66) in such a manner that it is stressed against a pressure present in one of the chambers (30A, 30B).

6. Vehicle according to one or more of Claims 2 to 5, **characterised in that** the position of the display means is determined by the membrane (48).

7. Vehicle according to one or more of Claims 2 to 6, **characterised in that** the display means is configured preferably as a ring (66), which is operatively connected to the membrane (48) or the plunger (62) and which cooperates with fixed reference displays preferably provided on a housing (24) of the fill indicator (24A) and preferably configured in the manner of spaced lines (68).

8. Vehicle according to one or more of the previous claims, **characterised by** a supplementary ventilator, which is operatively connected to the outlet channel (23).

9. Vehicle according to one or more of the previous claims, **characterised in that** the fill indicator (24A) or at least the display means is arranged so that it can be seen by an operator seated on a driver's seat of the vehicle (10).

10. Vehicle according to one or more of the previous claims, **characterised in that** the collecting container (20) is arranged in a rear region of the vehicle (10) and the outlet channel (23) preferably runs laterally along the vehicle (10).

## Revendications

1. Véhicule (10) pour l'entretien des pelouses, jardins et terrains, comportant un mécanisme de coupe avec un orifice d'éjection (14), un bac de ramassage (20) et un canal de sortie (23), par lequel l'orifice d'éjection est relié au bac de ramassage (20), le canal de sortie (23) étant relié à un indicateur de niveau (24A) mesurant la pression d'air régnant dans le canal de sortie (23), **caractérisé en ce que** l'indicateur de niveau (24A) comporte un afficheur qui indique différents niveaux de remplissage.

2. Véhicule selon la revendication 1, **caractérisé en ce que** l'indicateur de niveau (24A) comporte une chambre (30) qui est séparée en deux chambres (30A, 30B) par une membrane (28) flexible.

3. Véhicule selon la revendication 2, **caractérisé en ce que** l'une des chambres (30B) est reliée au canal de sortie (23) par l'intermédiaire d'une conduite d'air (25).

4. Véhicule selon la revendication 2 ou 3, **caractérisé en ce que** l'indicateur de niveau (24A) comporte un piston (62) mobile, qui coopère avec la membrane (48).

5. Véhicule selon l'une quelconque des revendications 2 à 4, **caractérisé en ce que** la membrane (48) ou le piston (62) coopère avec un ressort (66) de telle sorte qu'il est sollicité à l'encontre d'une pression régnant dans l'une des chambres (30A, 30B).

6. Véhicule selon l'une quelconque des revendications 2 à 5, **caractérisé en ce que** la position de l'afficheur est déterminée par la membrane (48).

7. Véhicule selon l'une quelconque des revendications 2 à 6, **caractérisé en ce que** l'afficheur est réalisé sous la forme d'un élément relié activement à la membrane (48) respectivement au piston (62) et de préférence sous forme de bague (66), qui coopère avec des indicateurs de référence localement fixes, qui sont prévus de préférence sur un boîtier (24) de l'indicateur de niveau (24A), qui sont réalisés de préférence sous forme de lignes (68) espacées.

8. Véhicule selon l'une quelconque des revendications précédentes, **caractérisé par** un ventilateur supplémentaire qui est relié activement au canal de sortie (23).

9. Véhicule selon l'une quelconque des revendications précédentes, **caractérisé en ce que** l'indicateur de niveau (24A) respectivement au moins l'afficheur est agencé de telle sorte qu'il peut être lu par un conducteur assis sur le siège du chauffeur du véhicule (10).

10. Véhicule selon l'une quelconque des revendications précédentes, **caractérisé en ce que** le bac de ramassage (20) est situé dans une zone arrière du véhicule (10) et le canal de sortie (23) s'étend de préférence sur le côté le long du véhicule (10).
